# FASCICULE DE BREVET EUROPEEN

(11) **EP 1 814 773 B1**
(45) Date de publication et mention de la délivrance du brevet: **03.03.2010**
(21) Numéro de dépôt: 05818922.6
(22) Date de dépôt: 16.11.2005
(51) Int. Cl.: B62D 47/00, B62D 25/20, B60P 3/42

(54) **VEHICULE AUTOMOBILE COMPORTANT UNE STRUCTURE AVEC UN PLANCHER DE CHARGEMENT**
EINE STRUKTUR MIT EINEM LADEBODEN UMFASSENDES KRAFTFAHRZEUG
MOTOR VEHICLE COMPRISING A STRUCTURE WITH A LOADING FLOOR

(30) Priorité: 19.11.2004 FR 0412269
(43) Date de publication de la demande: 08.08.2007
(73) Titulaire: RENAULT S.A.S., 92100 Boulogne Billancourt (FR)
(72) Inventeur: OUMESSAOUD, Nordine, F-78210 SAINT CYR L'ECOLE (FR)
(74) Mandataire: Guyon, Rodolphe C.
(86) Numéro de dépôt international: PCT/FR2005/050957
(87) Numéro de publication internationale: WO 2006/054022

(56) Documents cités:
- FR-A- 2 748 442
- FR-A- 2 841 866
- US-B1- 6 644 721

## Description

L'invention concerne un véhicule automobile comportant une structure avec un plancher de chargement. Un exemple de cette technique antérieure est divulgué par le document FR 2748442.

La structure des véhicules automobiles, ou carrosserie, comporte un plancher en partie inférieure. En partie arrière, ce plancher est destiné à être une zone de chargement, et on lui confère de préférence une forme plane pour faciliter le chargement et le stockage d'objets.

Pour un véhicule à usage particulier, la zone de chargement est contiguë à une zone pour passagers équipée d'une ou plusieurs rangées de sièges. En général, cette zone pour passagers a une géométrie complexe pour intégrer au mieux les sièges et offrir la plus grande place possible aux passagers. En particulier, une zone est prévue pour reposer les pieds des passagers, et cette zone est la plus basse possible, au-dessous du niveau de la zone de chargement.

La structure du véhicule est réalisée par l'assemblage de tôles formées par emboutissage et assemblées entre elles par soudure. Le plancher comporte en général des éléments de structure tels que des longerons et des traverses qui supporte une tôle formant la surface supérieure du plancher. L'étanchéité entre les tôles est assurée par du mastic aux endroits nécessaires. Après l'assemblage et le masticage, la structure passe sur une chaîne de traitement de surface pour la protéger contre la corrosion et la revêtir de peinture.

Dans le cas d'un véhicule dit utilitaire, destiné à transporter des marchandises, la zone pour passagers est réduite à une seule rangée de sièges et la zone de chargement occupe la majorité de la surface du plancher.

Cependant, les structures de véhicules à usage particulier ne conviennent pas à un usage utilitaire et vice-versa. Il faut donc concevoir les structures de véhicules spécifiquement en fonction de ces usages, ce qui occasionnent des coûts supplémentaires d'études et d'outillage.

C'est donc un objectif de l'invention de proposer un véhicule automobile dont la structure puisse être facilement adaptée à un usage particulier ou à un usage utilitaire.

Avec cet objectif en vue, l'invention a pour objet un véhicule automobile comportant une structure avec un premier plancher, le premier plancher ayant une première zone sensiblement plane surélevée et une zone basse contiguë à la première zone. La zone basse comporte un cadre de surélévation, un deuxième plancher étant fixé mécaniquement sur le cadre dans un plan aligné avec celui de la première zone.

Ainsi, la même structure prévue pour un véhicule à usage particulier peut être transformée facilement pour un véhicule à usage utilitaire en ajoutant le cadre de surélévation et le deuxième plancher. L'outillage n'a pas besoin d'être spécifique à chacun des types de véhicule. De plus, la structure à usage utilitaire est renforcée, ce qui est particulièrement intéressant pour transporter de fortes charges.

Par ailleurs, le fait de fixer le deuxième plancher mécaniquement permet de traiter l'espace sous le deuxième plancher à la chaîne de traitement de surface pour obtenir une bonne protection de cet espace contre la corrosion.

De préférence, le premier plancher comporte en zone basse au moins un orifice pour évacuer l'eau et des canaux pour canaliser l'eau vers l'orifice. Comme le deuxième plancher est fixé mécaniquement et que son étanchéité n'est pas assurée, on prévoit l'évacuation de l'eau qui pénétrerait entre les deux planchers par les canaux et l'orifice. On peut ainsi laver la zone de chargement et le deuxième plancher à grandes eaux sans risque de stagnation d'eau dans une partie du véhicule et sans risque de corrosion associé.

De manière particulière, l'orifice est muni d'un clapet. On évite ainsi un retour d'éclaboussures dans l'espace sous le deuxième plancher et on limite la pénétration de bruits extérieurs, sans empêcher l'écoulement de l'eau par l'orifice.

Selon un mode de réalisation particulier, le deuxième plancher comporte deux panneaux, le cadre comportant un longeron central, les panneaux étant fixés sur le longeron le long de leur jonction. L'introduction du deuxième plancher à l'intérieur de la structure est ainsi facilitée par rapport à un plancher d'un seul tenant, chaque panneau étant moins encombrant et moins lourd.

Pour l'évacuation de l'eau, le longeron comporte par exemple une goulotte de longeron sous-jacente à la jonction entre les panneaux. L'eau qui s'infiltrerait à la jonction entre les panneaux est récupérée dans la goulotte et canalisée.

Par ailleurs, le cadre comporte au moins une ouverture pour qu'un canal s'étende de part et d'autre du cadre. L'eau qui s'écoulerait au-delà des limites du deuxième plancher à l'extérieur du cadre est récupérée dans le canal et transférée à travers l'ouverture vers l'orifice d'évacuation.

De manière particulière, le premier plancher comporte une goulotte parallèle à la jonction avec le deuxième plancher et sous-jacente au deuxième plancher. L'eau qui s'infiltrerait dans la jonction entre le premier et le deuxième plancher est récupérée dans la goulotte et vers l'orifice d'évacuation.

L'invention sera mieux comprise et d'autres particularités et avantages apparaîtront à la lecture de la description qui va suivre, la description faisant référence aux dessins annexés parmi lesquels :
- la figure 1 est une vue en perspective d'un élément de structure du véhicule conforme à l'invention ;
- la figure 2 est une vue du véhicule de la figure 1 avant montage du deuxième plancher ;
- la figure 3 est une vue similaire à la figure 2 avec le deuxième plancher monté ;
- la figure 4 est une vue en perspective selon un autre angle de la structure de la figure 3 ;
- la figure 5 est une vue en coupe longitudinale d'une partie de la structure des figures précédentes ;
- la figure 6 est une du détail VI de la figure 5.

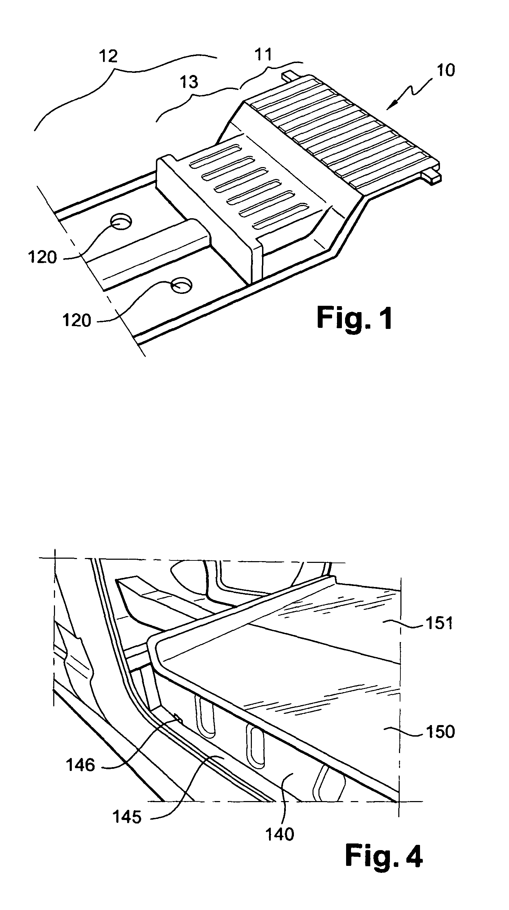

La structure d'un véhicule automobile conforme à l'invention est montré sur les figures 1 à 6.

La structure comporte un premier plancher 10 en partie inférieure, montré sur la figure 1. En partie arrière, le premier plancher 10 comporte une première zone 11 de chargement de forme plane. La première zone 11 de chargement est contiguë à une zone basse 12 pour passagers, destinée à être équipée d'une ou plusieurs rangées de sièges, non représentés. La zone basse 12 est prévue pour reposer les pieds de passagers, et est au-dessous du niveau de la première zone. La zone basse comporte une zone intermédiaire 13 contiguë à la première zone 11. Lorsque ce véhicule est configuré pour un usage particulier, la zone intermédiaire 13 reçoit la rangée de sièges.

La structure du véhicule est réalisée de manière classique par l'assemblage de tôles formées par emboutissage et assemblées entre elles par soudure. Le plancher comporte en général des éléments de structure tels que des longerons et des traverses, non représentés, qui supportent une tôle formant la surface supérieure du plancher.

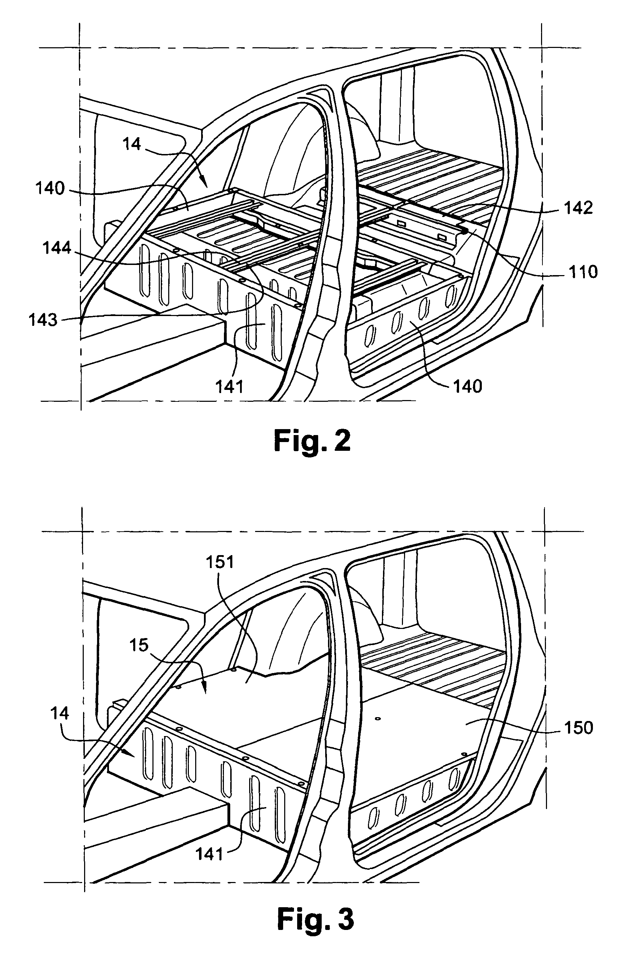

Pour fabriquer un véhicule à usage utilitaire, la zone basse 12 comporte un cadre 14 de surélévation qui la ceinture, comme on peut le voir sur la figure 2. Le cadre 14 comporte deux cloisons latérales 140, au niveau d'ouvertures de porte, et une cloison avant 141 s'étendant verticalement et transversalement pour relier les extrémités des cloisons latérales 140. Le cadre 14 comporte également une console 142 fixée sur la zone intermédiaire 13 à proximité de la première zone 11. Le cadre comporte en outre un longeron central 143 s'étendant longitudinalement sensiblement au milieu du cadre 14 entre la cloison avant 141 et la console 142.

Un deuxième plancher 15 est fixé mécaniquement sur le cadre 14 dans un plan aligné avec celui de la première zone 11, comme on peut le voir sur la figure 3. On dispose ainsi d'une large surface de chargement qui s'étend sur la première zone 11 et sur le deuxième plancher 15. Le deuxième plancher 15 est formé par deux panneaux 150, 151 dont la jonction s'étend au-dessus du longeron central 143.

Pour fabriquer un véhicule selon l'invention, on procède à l'assemblage de la structure intégrant la première zone 11 de plancher, la zone basse 12 et le cadre de surélévation 14, mais pas le deuxième plancher 15. La structure subit le traitement de surface classique, comprenant le masticage, la cataphorèse et la peinture. Les panneaux 150, 151 du deuxième plancher 15 subissent séparément le même traitement de surface. Ensuite, la structure passe sur une chaîne de montage, le long de laquelle les panneaux 150, 151 du deuxième plancher 15 sont fixés mécaniquement sur la structure, par exemple par vissage.

Du fait de ce mode de montage, l'étanchéité entre le deuxième plancher et la structure n'est pas assurée. C'est pourquoi on prévoit de capter et d'évacuer l'eau qui pourrait s'infiltrer dans l'espace situé sous le deuxième plancher.

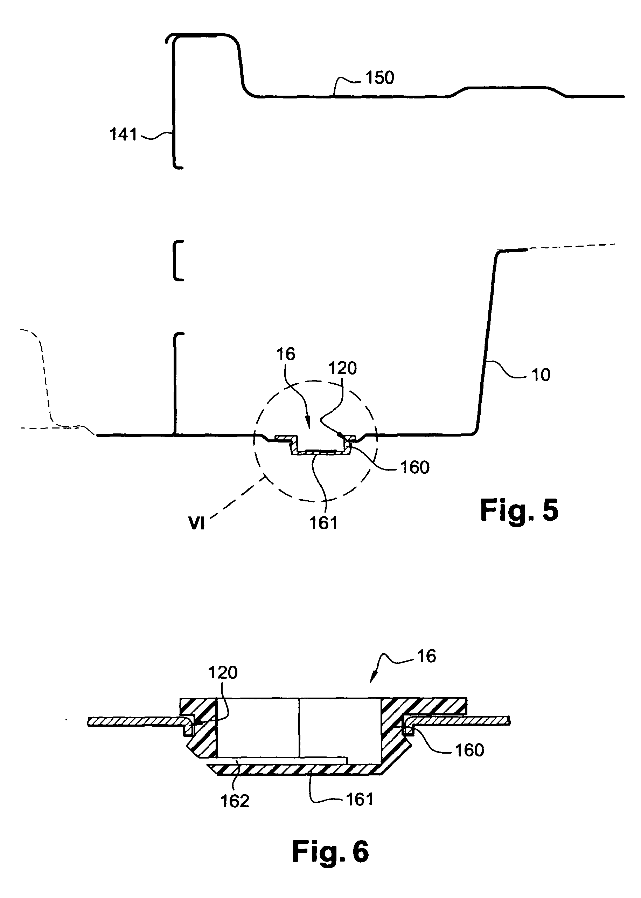

On prévoit en particulier que le premier plancher 10 comporte en zone basse 12 au moins un orifice 120 pour évacuer l'eau et des canaux pour canaliser l'eau vers l'orifice 120, comme représenté sur la figure 5. L'orifice 120 est situé dans un endroit au plus bas possible. Plusieurs orifices peuvent éventuellement être prévus, selon la géométrie de la zone basse 12.

Pour éviter ou limiter des remontées d'éclaboussures ou de bruits depuis l'extérieur, l'orifice 120 est muni d'un clapet 16 en élastomère, visible sur les figures 5 et 6. Le clapet 16 comporte un corps cylindrique 160 qui s'appuie sur la périphérie de l'orifice 120 et un opercule 161 s'étendant radialement au corps cylindrique 160. Une fente partielle 162 sépare l'opercule 161 du corps cylindrique 160, de telle sorte que l'opercule 161 est attaché au corps cylindrique 160 et peut s'en écarter élastiquement en élargissant la fente 162 pour laisser passer de l'eau.

Pour canaliser l'eau vers l'orifice 120, le longeron central 143 comporte une goulotte de longeron 144 sous-jacente à la jonction entre les panneaux. La goulotte 144 est percée vers la cloison avant 141 pour laisser couler l'eau à l'intérieur du cadre vers l'orifice 120. Par ailleurs, le premier plancher 10 comporte une goulotte 110 parallèle à la jonction avec le deuxième plancher 15 et sous-jacente au deuxième plancher 15. L'eau ainsi récupérée s'écoule par les extrémités de la goulotte 110 puis le long des cloisons latérales 140 dans de la zone intermédiaire 13 et finalement dans la zone basse 12 vers l'orifice 120.

Pour récupérer l'eau qui coulerait depuis le deuxième plancher 15 le long des cloisons latérales 140 du cadre 14, un canal 145 s'étend à l'extérieur du cadre 14 jusqu'à une ouverture 146 dans la cloison latérale 140 et se prolonge à l'intérieur du cadre 14 vers l'orifice 120.

## Revendications

1. Véhicule automobile comportant une structure avec un premier plancher (10), le premier plancher (10) ayant une première zone (11) sensiblement plane surélevée et une zone basse (12) contiguë à la première zone (11), la zone basse (12) comportant un cadre (14) de surélévation, **caractérise en ce que** un deuxième plancher (15) est fixé mécaniquement sur le cadre (14) dans un plan aligné avec celui de la première zone (11).

2. Véhicule selon la revendication 1, dans lequel le premier plancher (10) comporte en zone basse (12) au moins un orifice (120) pour évacuer l'eau et des canaux (145, 144, 110) pour canaliser l'eau vers l'orifice (120).

3. Véhicule selon la revendication 2, dans lequel l'orifice (120) est muni d'un clapet (16).

4. Véhicule selon la revendication 1, dans lequel le deuxième plancher comporte deux panneaux (150, 151), le cadre (14) comportant un longeron central (143), les panneaux (150, 151) étant fixés sur le longeron (143) le long de leur jonction.

5. Véhicule selon la revendication 4, dans lequel le longeron (143) comporte une goulotte de longeron (144) sous-jacente à la jonction entre les panneaux (150, 151).

6. Véhicule selon la revendication 2, dans lequel le cadre (14) comporte au moins une ouverture (146) pour qu'un canal (145) s'étende de part et d'autre du cadre (14).

7. Véhicule selon la revendication 1, dans lequel le premier plancher (10) comporte une goulotte parallèle (110) à la jonction avec le deuxième plancher (15) et sous-jacente au deuxième plancher (15).

## Claims

1. Motor vehicle comprising a structure with a first floor (10), the first floor (10) having a first generally flat raised area (11) and a low area (12) adjacent to the first area (11), the low area (12) comprising a raising frame (14), **characterized in that** a second floor (15) is mechanically fastened to the frame (14) in a plane aligned with that of the first area (11).

2. Vehicle according to Claim 1, in which the first floor (10) comprises in the low area (12) at least one hole (120) for draining the water and channels (145, 144, 110) for channeling the water toward the hole (120).

3. Vehicle according to Claim 2, in which the hole (120) is provided with a valve (16).

4. Vehicle according to Claim 1, in which the second floor comprises two panels (150, 151), the frame (14) comprising a central longitudinal member (143), the panels (150, 151) being fastened to the longitudinal member (143) along their junction.

5. Vehicle according to Claim 4, in which the longitudinal member (143) comprises a longitudinal member gutter (144) underlying the junction between the panels (150, 151).

6. Vehicle according to Claim 2, in which the frame (14) comprises at least one opening (146) so that a channel (145) extends on either side of the frame (14).

7. Vehicle according to Claim 1, in which the first floor (10) comprises a gutter which is parallel (110) with the junction with the second floor (15) and underlying the second floor (15).

## Patentansprüche

1. Kraftfahrzeug mit einer Struktur mit einem ersten Boden (10), der einen im Wesentlichen ebenen erhöhten ersten Bereich (11) und einen an den ersten Bereich (11) angrenzenden tiefen Bereich (12) hat, der einen Erhöhungsrahmen (14) umfasst, **dadurch gekennzeichnet, dass** ein zweiter Boden (15) in einer auf die Ebene des ersten Bereichs (11) ausgerichteten Ebene mechanisch am Rahmen (14) befestigt ist.

2. Fahrzeug nach Anspruch 1, wobei der erste Boden (10) im tiefen Bereich (12) mindestens ein Loch (120) zum Abführen von Wasser und Kanäle (145, 144, 110) zum Leiten des Wassers zum Loch (120) umfasst.

3. Fahrzeug nach Anspruch 2, wobei das Loch (120) mit einem Ventil (16) versehen ist.

4. Fahrzeug nach Anspruch 1, wobei der zweite Boden zwei Platten (150, 151) umfasst, wobei der Rahmen (14) einen mittleren Träger (143) umfasst und die Platten (150, 151) entlang ihrer Stoßstelle am Träger (143) befestigt sind.

5. Fahrzeug nach Anspruch 4, wobei der Träger (143) eine Trägerrinne (144) umfasst, die unter der Stoßstelle zwischen den Platten (150, 151) liegt.

6. Fahrzeug nach Anspruch 2, wobei der Rahmen (14) mindestens eine Öffnung (146) umfasst, damit sich ein Kanal (145) vom einen zum anderen Teil des Rahmens (14) erstrecken kann.

7. Fahrzeug nach Anspruch 1, wobei der erste Boden (10) eine Rinne (110) umfasst, die parallel zur Stoßstelle zum zweiten Boden (15) verläuft und unter dem zweiten Boden (15) liegt.
